# EUROPEAN PATENT APPLICATION

(11) **EP 4 730 055 A1**
(43) Date of publication of application: **22.04.2026**
(21) Application number: 24207095.1
(22) Date of filing: 17.10.2024
(51) Int. Cl.: G05B 13/02

(54) **SYSTEM AND METHOD FOR EXTRACTING EVENTS AND OPERATING PROCEDURES FROM PROCESS DATA**

(71) Applicant: ABB SCHWEIZ AG, 5400 Baden (CH)
(72) Inventor: TAN, Ruomu, 68309 Mannheim (DE); BORRISON, Reuben, 68782 Brühl (DE); SCHOCH, Nicolai, 69120 Heidelberg (DE)
(74) Representative: Maiwald GmbH

(57) **Abstract**

There is provided a method for automatically providing assistance in control of a process plant. The method comprises obtaining, for a predetermined past time period, first data indicative of process variables that are associated with the process plant and that have process variable values that have changed during an operation of the process plant during the predetermined past time period. The method further comprises obtaining, for the predetermined past time period, second data indicative of a workflow of operator actions associated with the operation. The method further comprises obtaining third data based on merging the first data and the second data. The method further comprises, based on inputting the third data into a multimodal artificial intelligence/machine learning model, providing, by the multimodal AI/ML model, assistance in control of the process plant. The assistance is at least one of pseudocode and control code.

## Description

### FIELD OF THE INVENTION

The invention relates to a method and a data processing apparatus for automatically providing assistance in control of a process plant. The invention further relates to a data processing system, a computer-readable medium, a computer program product and a use of automatically provided assistance in control of a process plant.

### BACKGROUND

The operation and production, such as the start-up of a large chemical plant or the execution of recipes in batch productions for example, can be done by carrying out certain steps in a certain order according to certain conditions. Moreover, the individual steps may also be dependent on one another.

Such operating sequences are often executed by operators (process operators). In particular, operators may also need to monitor certain process variables (PVs) whilst executing the steps to maintain the process within the envelope of safe operations. The manual execution usually requires substantial effort from the operators, e.g., thousands of clicks in the control system human machine interface (HMI), and longer execution time and can be subjected to human-made or human-based errors.

As opposed to this, solutions that can convert complicated operating sequences of actions performed or made by one or more operators, i.e. operator actions into predefined procedures and save them in one click / a few clicks, i.e. make them available as a certain macro or one/several-click-execution instruction (said in other words, one click will start execution of several predetermined operator actions in a predetermined order and time schedule) can save a lot of manual effort and enhance the reliability and efficiency of operations.

Nevertheless, configuration of such "one/few-click-solutions" will require substantial domain know-how from both process experts and control engineers, are thus errorprone due to their complexity, and cannot be easily or quickly generalized to various operational tasks or operator actions across various types of process plants.

Hence, in an industrial plant context, there is the problem of how to provide in a more efficient, more reliable and less time-consuming way assistance to operators in controlling or operating a process plant?

Hence, there is room and need for improvement regarding the assistance of operators in controlling or operating a process plant in an industrial plant context.

### SUMMARY

In view of the above, it is an object of the present disclosure to overcome at least part of the drawbacks available regarding the assistance of operators in controlling or operating a process plant in an industrial plant context.

Therefore, to address one or more of these drawbacks, there is provided, in a first aspect, a method for automatically providing assistance in control of a process plant. The method comprises obtaining, for a predetermined past time period, first data indicative of process variables that are associated with the process plant and that have process variable values that have changed during an operation of the process plant during the predetermined past time period. The method further comprises obtaining, for the predetermined past time period, second data indicative of a workflow of operator actions associated with the operation. The method further comprises obtaining third data based on merging the first data and the second data. The method further comprises, based on inputting the third data into a multimodal artificial intelligence/machine learning (AI/ML) model, providing, by the multimodal AI/ML model, assistance in control of the process plant. The assistance is at least one of the following:
- pseudocode for assisting an operator of the process plant in controlling the operation in future, and
- control code for automating at least part of the operation in future.

It shall be noted that the predetermined past time period may be any historical time period of any length.

Further, the obtaining of the first data, the second data, the third data and the assistance may be an automatic obtaining. I.e. automatically obtaining the first data, the second data, and the third data and automatically providing the assistance. The automatic obtaining may be started or triggered or initiated based on one or more predetermined criteria being satisfied. For example, in case an operation at the process plant is performed for the first time. For example, in case a certain event, like an alarm, occurred in a previous operation at the process plant. For example, in case a certain event, like an alarm, occurs during the operation. For example, in case it is instructed or set by an operator to be performed automatically.

The first data may be understood to comprise the process variables (PVs). PVs may be understood as variables that represent a process or an operation that a process plant performs. PVs may change based on the process or operation performed by the process plant. For example, in case a start-up process comprises to heat up a tank and in case a PV indicates the temperature of or in the tank, the PV, in particular a value of the PV will change during the heat up process, in particular it will rise. In this example, once the start-up process, which may also be understood as a start-up phase is completed or finished, such start-up process may represent a predetermined past time period. The start-up process may be just completed or it may be a start-up process that has been performed and has been completed several hours, days, weeks or months ago. The term "predetermined past time period" is to be understood in that it refers to a time period in past that comprises a certain starting point and a certain end point.

The second data may comprise the workflow of operator actions associated with the operation. The workflow of operator actions comprises an order, i.e. workflow of actions performed by an operator of the process plant that the operator performs or executes at or in relation to the process plant (or via a control entity associated with the process plant) for a certain process or operation, for example for a start up process of the process plant.

By the term "workflow", it is meant for example a series of actions, or decisions, etc. performed or executed by an operator. The series of actions, or decisions, etc are associated with the operation of the process plat, wherein the operation of the process plant is represented by or derivable from historical operational data that are associated with the process plant.

The merging may be understood as obtaining the third data from combining the first data and the second data.

The multimodal AI/ML model is an AI/ML model that can process datasets with multiple modalities, e.g., text, images, videos, time series etc. The multimodal AI/ML model may be trained or fine-tuned based on past or historical operational data of the process plant.

By the assistance it may be understood that an operator receives the pseudocode and/or the control code from the multimodal AI/ML model.

By pseudocode, said in other words, it may be meant a handbook or guideline in any form, for example as plain text, as an animated video, as a virtual reality representation of the process plant, as a "click-by-click" instruction that indicates one click after another or an order of clicks that need to be performed to an operator, or as any combination thereof.

By control code, it is meant a type of code or model that, when executed by an operator, automatically executes several operator actions. Hence, said in other words, by the control code, the operator may perform one click to start the execution of several operator actions, i.e. of several "clicks" the control code will automatically execute for the operator.

The method according to the first aspect is advantageous in that it may participate in enabling to benefit to the process operation both in the Greenfield phase and the Brownfield phase. Regarding a Greenfield application, after trial and error and initial configuration of the process or process plant, the Standard Operating Procedure (SOP) for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to several examples of the present disclosure, the method may further comprise selecting a past time period from historical operational data associated with the process plant as the predetermined past time period.

It should be noted that the selecting may be triggered, due to a certain time being reached, a certain time range being elapsed, a certain alarm being determined, based on one or more PVs violating predetermined threshold values and/or based on an operator instruction or setting for example without being limited thereto. Once the selecting may be triggered, the selecting may further trigger the method according to the first aspect for automatically providing assistance. Hence, said in other words, in case the selecting may start or may be triggered to start, as a result from the selecting, the provided assistance may be obtained automatically.

For example, the historical operational data may comprise a historical startup process and a time range or time period of the historical startup process may be selected as the predetermined past time period.

Hence, past time periods or past time ranges may be selected to comprise one or more processes, operations or operator actions of interest. Thus, generation of most suitable assistance is enabled.

According to several examples of the present disclosure, the selecting may comprise determining one or more events in the historical operational data and selecting the past time period from the historical operational data based on a result of the determining.

For example, an event may comprise an alarm, an anomaly, a change of one or more predetermined PVs, a change of one or more PVs by more than a predetermined change amount threshold, that the process plant has completed or finished a certain operation phase, for example the process plant has completed a startup phase, etc. The selected past time period may be selected to begin with a determined event, to end with a determined event, to surround a determined event by a certain time interval, for example 20 minutes before and (the same or different minutes) after the determined event, etc.

Hence, by such selecting, it is enabled that the selected past time period comprises one or more events of interest. Thus, assistance is further increased.

According to several examples of the present disclosure, the obtaining the first data may comprise determining a set of process variables that is associated with the operation, and determining, from historical operational data associated with the operation, the process variables from the set of process variables that have process variable values that have changed during the operation and that have violated predetermined threshold values.

For example, during a startup process of an industrial plant, the temperature in a tank may violate an alarm temperature.

Hence, more reliable and specific assistance is enabled.

According to several examples of the present disclosure, the obtaining the second data may comprise extracting, from the historical operational data associated with the operation, the workflow of operator actions by use of process mining.

By process mining, one or more orders of historical actions, for example clicks, performed by an operator during a certain operation or process may be obtained.

Hence, data indicative of historical operations may be obtained in a reliable way.

According to several examples of the present disclosure, the obtaining the first data may further comprise generating first descriptive text data associated with the determined process variables based on inputting the historical operational data associated with the operation into a large language model (LLM). Additionally or alternatively, the obtaining the second data may further comprise generating second descriptive text data associated with the extracted workflow based on the extracted workflow.

Said in other words, the descriptive text may describe the determined PVs. The description may be any description that may be considered relevant or supportive for an operator for example. For example, for one or more PVs, a short explanation may be added about an actual meaning of a PV or about an interaction or correlation of one PV with another PV. For example, it may be added to a PV indicating a temperature in a tank that an increasing temperature may also result in an increasing pressure inside the tank. Similarly, descriptive text may describe a certain workflow, entirely or at least part thereof. For example, the extracted workflow may be a workflow for a startup process of an industrial plant. Based on the extracted workflow being a startup process, the LLM may provide corresponding descriptive text. For example, such descriptive text may describe the startup process in more detail. For example, a duration of the startup process may be provided and potential alarms that occurred in the past may be provided.

Hence, assistance is even further increased.

According to several examples of the present disclosure, the obtaining the third data may further comprise at least one of:
- merging the first data and the second data based on time stamps obtainable from the predetermined past time period,
- adding the first descriptive text data to the merged first data and second data,
- adding the second descriptive text data to the merged first data and second data,
- filtering, for a same time stamp, duplicate from the first data and the second data, and
- filtering, for a same time stamp, duplicate descriptive text data from the first descriptive text data and the second descriptive text data.

The usage of such third data is advantageous in comparison to using the first data alone and in comparison to using the second data alone and in comparison to using the first data and the second data together, i.e. next to each other. Said in other words, due to the merging of the first data and the second data, the advantageous effect is achieved in that the resulting third data are more explaining, more comprehensible, more reliable, less confusing due to the absence of duplicates, more accurate, better related to certain events and time stamps, and thus more trustworthy to an operator as each of the first data and the second data individually.

Hence, an assistance is even further increased.

According to several examples of the present disclosure, the obtaining the third data may further comprise creating, from the merged first data and second data and from Piping and Instrumentation Diagrams (P&IDs) associated with the operation, a causal graph associated with the operation; and including a result of the creating into the third data.

By the causal graph, it may be understood a visual representation for the interaction or correlation among two or more PVs for example. For example, the causal graph may visualize by how much an increasing temperature in a tank will result in a pressure in the tank to rise.

Hence, assistance may be provided to an operator in a visual way, which may enable the operator to understand a complex situation quickly. In doing so, comprehensive decision support for the operator may further be provided.

According to several examples of the present disclosure, the obtaining the pseudocode and/or the control code may comprise taking, by the multimodal AI/ML model and from the third data, a sequence of operational steps associated with the workflow and taking, by the multimodal AI/ML model and from the third data, time series data of process variables associated with the sequence of operational steps; and generating, by the multimodal AI/ML model, the pseudocode and/or the control code based on a result of the taking.

Hence, assistance may be provided for a certain sequence of interest taking specific time stamps in a time series into account.

According to several examples of the present disclosure, the method may further comprise providing the pseudocode and/or control code to an operator of the process plant, by executing the pseudocode and/or control code in a simulation environment and/or in a real process plant context. The method may further comprise receiving feedback on a result of the executing; and training and/or finetuning the multimodal AI/ML model based on the received feedback.

For example, the operator may provide as feedback that a process step or operator action in an automatically performed process or operation needs to be adjusted. Similar, for example, a process step of operator action in generated guidelines, in a generated handbook or in a guided "click-by-click" process needs to be adjusted. For example, in an automatically performed startup operation, the temperature to which a tank may be heated up is to be reduced or increased. The operator may provide feedback that the descriptive text shall be written in a different style, for example more neutral or in bullet points.

Hence, a quality of the assistance may be increased or a certain quality of the assistance may be guaranteed.

According to several examples of the present disclosure, the feedback may be at least one of confirmative and penalizing. For example, the operator may approve a provided pseudocode or a provided control code. For example, the operator may reject a provided pseudocode or a provided control code. The feedback may be provided by an operator of the process plant. The feedback may be related to one or more time stamps included in at least one of the third data, the pseudocode and the control code. For example, an operator may indicate that a heat-up process of a tank starts too early or too late in a workflow.

Hence, an adaptation of the assistance for a certain process plant is further individualized for the certain process plant. Thus, a quality of the assistance may be further increased or a certain quality of the assistance may be further guaranteed.

According to several examples of the present disclosure, the operation may be at least one of:
- at least part of a startup-process,
- at least part of a shutdown-process,
- at least part of a production process,
- at least part of a change of product process,
- at least part of an executing of a recipe in batch production, and
- at least part of a control process.

Hence, adequate assistance may be provided for several individual operations or phases of operation of a process plant.

According to several examples of the present disclosure, the method may further comprise obtaining a standard operating procedure, SOP, that comprises a sequence of operator actions that overlap at least part of the operator actions of the workflow; and updating the sequence of operator actions of the obtained SOP based on the operator actions of the workflow.

By "overlap" it is meant that the SOP and the workflow may cover or represent a certain operation phase of a process plant, for example at least part of a startup-process, of a shutdown-process, a production process, a change of product process, an executing of a recipe in batch production, and/or a control process. Hence, "overlap" may also be understood in that the operator actions of the SOP and the workflow are similar to each other, for example that at least a predetermined (absolute or relative) amount or number of operator actions are the same for the SOP and the workflow. For example, for a startup-process of a certain process plant, a SOP may define the following operator actions A - B - C - D - E. In contrast thereto, the workflow of operator actions may define the following operator actions A - B* - C - D - E* - F. I.e., the operator actions B and E are different, for example a different target temperature or a different target pressure may be set, and the operator action F is additionally included, for example a further control process for controlling the target temperature or the target pressure. Hence, the operator actions A - B - C - D - E in the SOP may be updated to A - B* - C - D - E* - F. Hence, the SOP may be updated.

Hence, SOPs may be made more dynamic and may be more suitable and adaptable to developments in certain process plant operations. Based thereon, SOPs may also be used for recommendations for operators, since SOPs may be adjusted to a certain operation phase or to a certain process plant.

According to a second aspect, there is provided a data processing apparatus for automatically providing assistance in control of a process plant. The data processing apparatus comprises one or more processors being configured to carry out the method of the first aspect.

The data processing apparatus according to the second aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to a third aspect, there is provided a data processing system for automatically providing assistance in control of a process plant. The data processing system comprising a data processing apparatus of the second aspect. Additionally or alternatively, the data processing system comprises means for carrying out the method of the first aspect.

The data processing system according to the third aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

According to a seventh aspect, there is provided a use of at least one of the pseudocode and the control code according to the first aspect, a data processing apparatus of the second aspect, a data processing system of the third aspect, an industrial plant of the fourth aspect, a computer-readable medium of the fifth aspect, and a computer program product of the sixth aspect.

The use according to the seventh aspect is advantageous in that it may participate in enabling to benefit to the process operation both in the Greenfield phase and the Brownfield phase. Regarding a Greenfield application, after trial and error and initial configuration of the process or process plant, the SOP for certain tasks, such as startups, shutdowns and shifts of operating modes of process plants, can be derived from several successful examples with minimum manual effort for configuration. Regarding Brownfield application, automating and optimizing the sequence of operator actions for executing certain tasks from the experience in the operation. It is further enabled to reduce an engineering effort needed to configure solutions like One Button Start-up (or one click solutions as indicated above) so that the solution can be scaled up easily for various plants, various scenarios and sequences. Moreover, it is further enabled to maintain the knowledge from experienced process experts and capture the best practices that were achieved by trial and error and experiences by converting such best practices into SOPs, control sequences and/or control codes.

Optional features of the first aspect may form part of any of the second to seventh aspects, mutatis mutandis.

The method of the first aspect may be at least in parts computer implemented. Preferably, the method according to the first aspect is computer implemented.

The computer-readable medium of the fifth aspect may have stored thereon the computer program product of the sixth aspect.

The term "obtaining", as used herein, may comprise, for example, receiving from another system, apparatus, LLM, AI/ML model or process; receiving via an interaction with a user; loading or retrieving from storage or memory; measuring or capturing using sensors or other data acquisition apparatuses, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an end-end process describing a process to generate a control sequence through operational data according to several examples of the present disclosure;
- Figure 2 illustrates a flowchart indicative of a method according to several examples of the present disclosure; and
- Figure 3 shows a block diagram schematically illustrating a data processing apparatus according to several examples of the present disclosure.

### DETAILED DESCRIPTION

According to several examples of the present disclosure, there are described i.a. a system and method for automatically generating and modifying control sequences, operating procedures, and/or pseudo codes for fulfilling certain tasks in the operation and control of process plants, such as start-ups and shut-downs or the recipe in batch production for example. The system and method leverage various artificial intelligence (Al) techniques to identify the sequences or Standard Operating Procedure (SOPs) from historical data of successful examples in the past and contextualize them using process documentation. Optionally, control codes can be generated to automatically execute the identified sequence for full autonomy.

With the proposed system and method, it is achieved the advantage in that it is enabled to easily automate existing procedures of configuring the control sequences for executing certain tasks without substantial domain know-how or manual effort for configuration. Thus, the solution can scale easily across various tasks from various plants and customers.

According to various examples of the present disclosure, the solution as disclosed herein aims to automate and simplify the configuration of such "One Button Start-up" solutions by leveraging both process documentations, such as P&IDs, control narratives, and process description, and various types of operational data, such as time series and Alarms and Event (A/E) logs, from existing successful examples in the historical operations.

For a given task in process operation, it is disclosed to utilize various techniques from both Analytical Al, e.g., change point detection for identifying changes in time series data from process variables, and generative AI to extract existing controlled variables, control logics and cause and effect relationships between certain operator actions and process variables (PVs). The extracted information is then consolidated and crosschecked to generate a control sequence, SOP, and/or pseudocode that describes the steps for executing the task. The generated sequence may then be evaluated by a human expert and modified accordingly. Optionally, control codes can be generated according to the sequence for automating the execution of the steps.

In more detail, according to various examples of the present disclosure, the present disclosure aims to derive operating sequences and/or control codes for fulfilling certain tasks in process plants in an industrial plant context such that the tasks can be automated whilst the engineering effort for configuring such sequences is minimized.

An analogy can be made to the application in robotics. By use of adequate software program, one may easily "teach" collaborative robots like "GoFa" by moving a robot arm by interacting with the robot and demonstrating the actions. First, the user may demonstrate once the trajectory the robot should follow and the actions the robot should take by moving the robot arm from one point to a next point, opening/closing a gripper at the robot's arm and other actions for example. During this demonstration, the coordinates of checkpoints on the trajectory and the actions taken are recorded. Afterwards, control codes are generated automatically using the recorded data. The control codes are then used to control the robot to follow the desired trajectory demonstrated by the user in the future. By doing so, teaching and programming of robots are made much easier and more accessible to end users without the need of coding.

The same idea may also benefit significantly the production of chemical processes for example. For example, in a greenfield application, domain experts, such as operators and process engineers, usually need to carry out multiple tests for the start-up of the newly built process plant until the performance of the start-up is satisfactory, i.e. satisfies predetermined criteria. Afterwards, the domain experts need to compose a SOP for the start-up according to their experience and best practices from the trial and error of the new implementation of the start-up of the newly built process plant. For the start-ups to be automated in the future, control engineers may also need to program the control sequence according to the SOP.

According to several examples of the present disclosure, the domain experts can easily click "save" after the successful execution of the start-up and the corresponding "trajectory" will be identified from the time series data and the A&E data for example; then the corresponding "control codes", such as control sequence or NL-based SOP, is generated automatically and saved for future execution.

Similar, the present disclosure can also be beneficial for other applications, such as batch processes. Currently operators can overwrite predefined steps in the Manufacturing Execution System (MES) and then program the changes they made and make them parts of a new recipe. According to several examples of the present disclosure, the modification of the recipe may be identified automatically and saved and applied for future production.

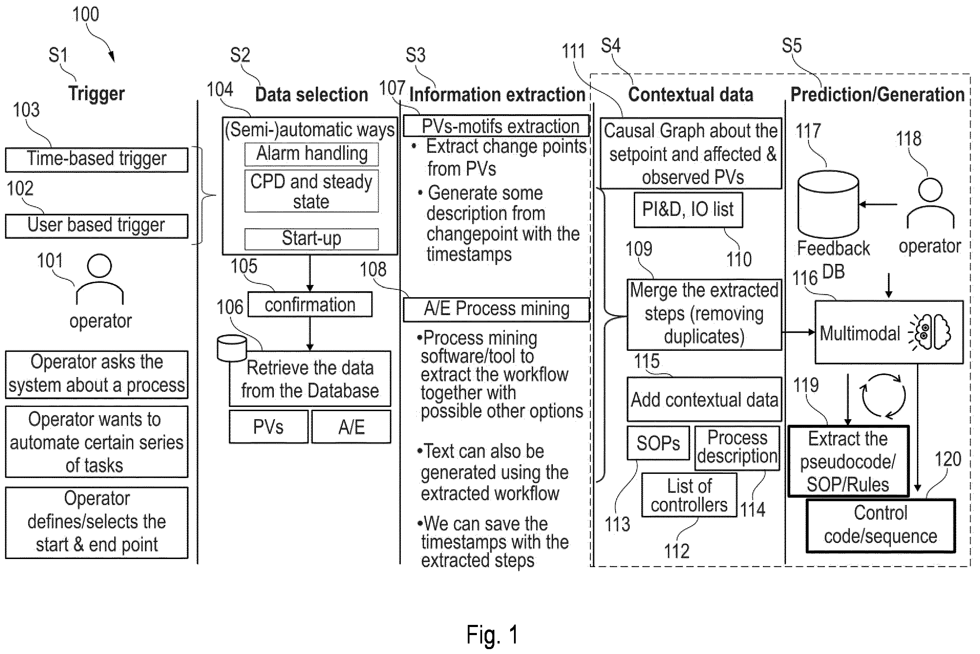

Referring now to Figure 1, according to several examples of the present disclosure, shows an end-to-end process describing a process to generate a control sequence through the operational data. Figure 1 is described in detail below. In doing so, a method comprising five steps S1 to S5 for illustrating the end-to-end process is outlined with reference to Figure 1.

### Regarding S1 - Trigger:

There can be several triggers for the system 100 to start its analysis. First, an operator 101 can query the system 100 to ask about completing a task on the process plant based on previous data to the system. Hence, there may be a user-based trigger 102. Additionally or alternatively, there may be a time-based trigger 103, i.e. based on a predetermined time period being elapsed or based on a predetermined time of a day being reached for example. Second, the system 100 can monitor the operational data of a process plant, for example PVs and/or A/E, and may trigger, as a result of the monitoring, extraction of changes or interesting changes in the process plant, in particular extracting of PVs (values of PVs) and A/E, for example that violate predetermined trigger criteria, for example like predetermined threshold values for one or more PVs (values of the PVs).

### Regarding S2 - Data selection:

Data, in particular historical operational data associated with an operation of the process plant, can be selected by one or more of the following:
- by an operator manually selecting a time range/time period (for example in a displayed screen that displays historical operational data stored in a database for example) for the system 100 to extract the datasets.
- data selection can be done semi-automatically 104, by using for example one of the following ways, but is not limited to these examples:
   a) extracting alarms or (interesting alarms; interesting in that the operator 101 may select these alarms according to his/her preferences for example) and checking the actions and steps performed in the past (i.e. as included in or derivable from the historical operational data) to fix the alarms, the time period before starting of the alarm and after fixing the alarm can be taken into account. Change points may be detected in a time series, and the corresponding PVs, i.e. the one or more PVs (or values of the PVs) that change at a certain time, which were affected can be taken into account. A change point may be understood as a point in time (hence, a point in a time series that has a certain time stamp for example) at which a value of a PV changes. Such change may be any change or may be a change that violates a predetermined minimum change amount. This way, a period or range of activities in the operation of the process plant (or in the process plant as such) can be extracted, and such extracted period or range may serve as a predetermined time range for which data may be obtained or extracted. Additionally or alternatively, the system can also lookup the past startups of the process plant for example (or any other operation of the process plant in general) by identifying in the historical operational data one or more events that lead to the startup and then to the process plant's steady state (i.e. when the startup is completed). The time range from starting up the plant to reaching its steady state can be taken into account as a predetermined time range for example.
   b) all these time ranges (that may interest the operator 101) can be shown to the operator 101 for getting validation or confirmation 105 to check whether it is interesting or desirable to create an automation sequence for these repetitive steps or not. A statistic on how many times similar sequences have happened in the process plant can also be shown to the operator 101.
   c) once the time range is confirmed from the operator 101, corresponding PVs and/or A/E may be extracted or retrieved 106 from historical operational data and may be shown to the operator 101.

### Regarding S3 - Information extraction:

Information extraction takes place in the following two ways: Motifs from time series are extracted and a workflow, i.e. a workflow of operator actions for example, is extracted.

The extracted motifs from time series may be understood to comprise data indicative of extracted PVs. The data indicative of extracted PVs may be understood as extracted PVs data or first data 107. The extracted workflow may be understood to comprise data indicative of executed or performed operator actions, i.e. actions the operator 101 performed or executed for operating or controlling the process plant. The extracted workflow data may be understood as second data 108.

In more detail, regarding the extraction of motifs from a time series, specific change points and corresponding datapoints that lead to steady state of the time series (i.e. of the operation of the process plant for example) for example are used to extract motifs that may be interesting for the operator 101. Together with these motifs correlational analysis may be done to find out the effect of these timeseries data on other PVs. Also, the PVs which remain unchanged can be dropped. These motifs will naturally be of unequal length. A text description of these motifs can be generated using LLMs by providing additional context such as PV names, section of the plant, ongoing process(es), etc. By the term "motif" it is meant a reoccurring "pattern" of, e.g., events, circumstances, and/or operator actions, all in the context of the plant operation. Extraction and correlational analysis may allow to find these "patterns" (for example in operational data of the corresponding process plant), e.g., an event that occurs for at least a predetermined number of times or always occurs if a certain change point is reached for example.

In more detail, regarding the extraction of a workflow, for example through Alarm and Event log, process mining software/tool may be used to extract the workflow together with possible other options. Text can also be generated using the extracted workflow. It can be saved the timestamps for the extracted workflow and for the extracted steps included in the extracted workflow.

### Regarding S4 - Contextual data:

The data obtained from the previous step S3 can be merged 109 and additional context can be added to it in the following way for example:
- The PV data extracted, i.e. the first data 107, and A/E data extracted, i.e. the second data 108, can be merged on the times stamps to obtain merged data or third data 109, and a duplicate text or information in a same timestamp can be filtered.
- The extracted steps can be used to extract relevant information from SOPs 113 and process description 114.
- As the information consists of PVs and corresponding equipment, information can be extracted from A/E data, this information can be further used to extract the relevant information 110 from P&ID and input-output (IO) list(s).
- Together with P&ID diagrams and PV information on what gets affected by certain change points in the PVs, for example which portion or element of the process plant is effected by which operation, process or operator action and in what amount or to what extent, i.e. in what way. Based thereon, there can be created a causal graph 111, which can serve as a preprocessed contextual data for a multimodal AI/ML model 116.
- Also, the extracted information, i.e. extracted from the first data 107 and/or the second data 108, can also contain a list of controllers 112 that are controlling a specific portion or element of the process plant.
- Contextual data 115 may be added to the merged data, i.e. the third data 109 based on the extracted PV data, i.e. the first data 107, and/or the extracted workflow data, i.e. the second data 108.

### Regarding S5 - Prediction/Generation:

Prediction/Generation uses the extracted data, i.e. the merged data and any additionally incorporated or derived information from the previous step S5: the time series data with optional description merged with a mined process by using alarms/events for example. Corresponding contextual data 115 may be added.

The extracted data, i.e. the third data 109 is presented to the multimodal AI/ML model 116 which may be pre-trained or finetuned to take the third data 109 or to extract from the third data 109 and take a sequence of operator actions or processes performed/executed by the operator 101 (which may be indicated in the second data 108), time series PV data (which may be indicated in the first data 107) and contextual data (which may be indicated in the first data 107 and/or the second data 108) to generate pseudocode 119 or control code 120.

Regarding the pseudocode, pseudocode may describe the action(s) or sequence of actions to perform. The pseudocode may comprise an indication for the operator 101 for example to wait for occurrence of a specific event to perform a next action. This event can be a wait time, observing the time series to reach a steady state, etc. The pseudocode may comprise to repeat the above process. It shall be noted that the expression "the above process" may be understood in two ways. First, the pseudocode is extracted for future usage, such that the process of i) the operator executing a certain action, then ii) waiting for some time and iii) executing the next action can be repeated and/or reproduced in a future operation of the process plant. Second, the process of i) the operator executing a certain action, then ii) waiting for some time and iii) executing the next action can be repeated a one or more times in one piece of pseudocode.

Regarding the control code, the multimodal AI/ML model 116 can also output control code to automate extracted sequences or operation actions.

The generated pseudocode or control sequence may be shown to an operator 118 (which may be the same operator 101) or control engineer, by executing the code in a simulation environment or at the real process plant for example to get the correct confirmation or feedback from the operator 101. The obtained feedback or confirmation can be integrated, e.g., as a confirming tag or as a penalty to the respectively inferred conclusion.

The feedback may be recorded in a feedback database 117 for a later training or finetuning of the multimodal AI/ML model 116.

With reference to Step S3, motifs or "patterns" as outlined above in more detail may be extracted and may thereby be collected (i.e. stored in a database for example). Further, SOPs normally exist in industrial plants, for example for operations of and/or operator actions at a certain process plant, and are usually static. However, according to several examples of the present disclosure, SOPs and extracted "patterns" can be merged together for updating the SOPs. In doing so, the SOPs are more dynamic and may also be used for other purposes like recommendations or PLC code generation. Hence, said in other words, according to several examples of the present disclosure, "patterns" of operator actions or the workflow of operator actions may be obtained as outlined above in detail and may be used to update one or more SOPs that are associated with or overlap one or more operator actions with operator actions included in the "patterns" or in the workflow. For example, one or more operator actions provided or included in a SOP may be updated according to or may be brought into conformity with corresponding operator actions included in the "patterns" or in the workflow. Such updated SOPs can be used for further recommendations and also to generate code for automation.

According to several examples of the present disclosure, it shall be noted that each of the first data 107, the second data 108 and the third data 109 may be obtained automatically and may be stored in a database automatically. Based thereon, recommendations of actions for several operations at a process plant may be provided to an operator.

Hence, in view of the above, according to several examples of the present disclosure, there are provided a system and method to generate automation control code sequence or pseudocode of repetitive tasks observed in a process plant using AI/ML for example. There is provided an extraction of a causal graph from PVs and A/E for usage as contextual data. There is further provided showcasing the control code or pseudocode for verification using a simulation system or graph-based format on an operator screen for example to get feedback. Moreover, there are provided a system and method which uses feedback from human experts (operators) to modify comprising to confirm or to adapt the generated pseudocode and/or control sequences. Optionally, the system has a dedicated database attached, to collect SOPs, flow charts with conditions, time series, PVs, A&E data/logs, etc.

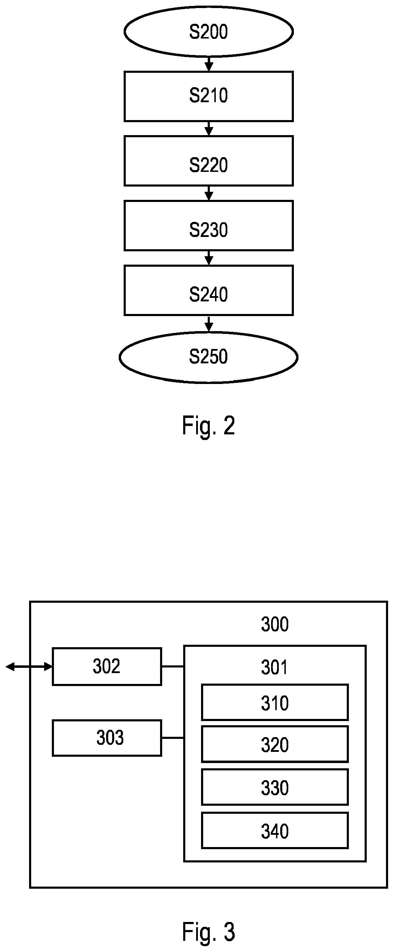

Referring now to Figure 2, Figure 2 illustrates a flowchart indicative of a method according to several examples of the present disclosure. The method is for automatically providing assistance in control of a process plant.

According to several examples of the present disclosure, the multimodal AI/ML model 116 according to Figure 1 may be configured to perform the method or at least part of the method steps as illustrated according to Figure 2.

The method starts in S200.

In S210, the method comprises obtaining, for a predetermined past time period, first data 107 indicative of process variables that are associated with the process plant and that have process variable values that have changed during an operation of the process plant during the predetermined past time period.

In S220, the method comprises obtaining, for the predetermined past time period, second data 108 indicative of a workflow of operator actions associated with the operation.

In S230, the method comprises obtaining third data 109 based on merging the first data 107 and the second data 108.

In S240, the method comprises, based on inputting the third data 109 into the multimodal AI/ML model 116, providing, by the multimodal AI/ML model 116, at least one of the following for assistance in control of the process plant:
- pseudocode 119 for assisting an operator 101 or 118 of the process plant in controlling the operation in future, and
- control code 120 for automating at least part of the operation in future.

The method ends in S250.

Referring now to Figure 3, Figure 3 shows a block diagram schematically illustrating a data processing apparatus 300 according to several examples of the present disclosure. In particular, according to several examples of the present disclosure, there is provided a data processing apparatus 300 for automatically providing assistance in control of a process plant. The data processing apparatus 300 comprises one or more processors 301 being configured to carry out the method as outlined above with reference to Figure 1 and/or the method according to Figure 2.

According to several examples of the present disclosure, the data processing apparatus 300 may comprise means to function as such multimodal AI/ML model 116 as outlined above with reference to Figure 1.

In more detail, according to various examples, a data processing apparatus 300 being configured to carry out the method of Figure 2 may comprise a processing circuitry, a processing function, a processing means, a processing unit or a processor 301, which enables the data processing apparatus 300 to participate in automatically providing assistance in control of a process plant. The processor 301 may comprise one or more processing portions or functions, wherein the processing portions or functions may be provided as one or more physical or virtual entities. The data processing apparatus 300 may comprise one or more communication interfaces 302. The data processing apparatus 300 may further comprise a memory or memory unit 303 for storing data, programs and/or instructions to be executed by the processor. The memory 303 may be a memory internal to the data processing apparatus 300 or may be a memory external to the data processing apparatus 300, for example at a cloud server. The processor 301 may comprise one or more portions, which enable the data processing apparatus 300 to execute the method of Figure 2 for example. According to several examples of the present disclosure, an obtaining portion 310 may be configured to perform such obtaining according to S210 of Figure 2, an obtaining portion 320 may be configured to perform such obtaining according to S220 of Figure 2, an obtaining portion 330 may be configured to perform such obtaining according to S230 of Figure 2, and a providing portion 340 may be configured to perform such providing according to S240 of Figure 2.

According to several examples of the present disclosure, the respective portions of the data processing apparatus 300 may also be understood as means for carrying out the certain function.

According to several examples of the present disclosure, there is provided a data processing system for automatically providing assistance in control of a process plant. The data processing system comprises the data processing apparatus 300 according to Figure 3 and/or comprises means for carrying out the method as outlined with reference to Figure 1 or according to Figure 2. The data processing system may represent such system 100 as outlined above with reference to Figure 1.

According to several examples of the present disclosure, there is provided an industrial plant comprising the data processing apparatus 300 according to Figure 3 and/or the data processing system as outlined above. The industrial plant may comprise the process plant for which the assistance is automatically provided as detailed according to the method as outlined with reference to Figure 1 or according to Figure 2.

According to several examples of the present disclosure, there is provided a computer-readable medium comprising instructions which, when executed by a computing system, causes the computing system to perform the method as outlined with reference to Figure 1 or according to Figure 2. The computer-readable medium may be transitory or non-transitory, volatile or non-volatile.

According to several examples of the present disclosure, there is provided a computer program product comprising instructions which, when executed by a computing system, enable or cause the computing system to perform the method as outlined with reference to Figure 1 or according to Figure 2. The computer program product may comprise a computer-readable medium comprising instructions of the computer program product. The computer-readable medium as mentioned above may have stored thereon the computer program product.

According to several examples of the present disclosure, there is provided a use of the data processing apparatus 300, the data processing system as outlined above, the industrial plant as outlined above, the computer-readable medium as outlined above and/or the computer program product as outlined above. In particular, there is provided use of the method as outlined with reference to Figure 1 or according to Figure 2. Moreover, there is provided use of the automatically provided assistance according to the method according to Figure 2. In more detail, there is provided use of the pseudocode and/or the control code as obtained according to the method according to Figure 2.

The method according to Figure 2 may be at least in parts computer implemented. Preferably, the method according to Figure 2 is computer implemented.

Optional features of the method as outlined with reference to Figure 1 or according to Figure 2 may form part of the data processing apparatus 300, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, fieldprogrammable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for automatically providing assistance in control of a process plant, the method comprising:
obtaining (S210), for a predetermined past time period, first data (107) indicative of process variables that are associated with the process plant and that have process variable values that have changed during an operation of the process plant during the predetermined past time period;
obtaining (S220), for the predetermined past time period, second data (108) indicative of a workflow of operator actions associated with the operation;
obtaining (S230) third data (109) based on merging the first data (107) and the second data (108); and
based on inputting the third data (109) into a multimodal artificial intelligence/machine learning, AI/ML, model (116), providing (S240), by the multimodal AI/ML model (116), at least one of the following for assistance in control of the process plant:
pseudocode (119) for assisting an operator (101; 118) of the process plant in controlling the operation in future, and
control code (120) for automating at least part of the operation in future.

2. The method according to claim 1, further comprising selecting a past time period from historical operational data associated with the process plant as the predetermined past time period.

3. The method according to claim 2, wherein the selecting comprises determining one or more events in the historical operational data and selecting the past time period from the historical operational data based on a result of the determining.

4. The method according to any one of claims 1 to 3, wherein the obtaining the first data comprises
determining a set of process variables that is associated with the operation, and
determining, from historical operational data associated with the operation, the process variables from the set of process variables that have process variable values that have changed during the operation and that have violated predetermined threshold values.

5. The method according to any one of claims 1 to 4, wherein the obtaining the second data comprises
extracting, from the historical operational data associated with the operation, the workflow of operator actions by use of process mining.

6. The method according to claim 4 or 5,
wherein the obtaining the first data further comprises generating first descriptive text data associated with the determined process variables based on inputting the historical operational data associated with the operation into a large language model, LLM, and/or
wherein the obtaining the second data further comprises generating second descriptive text data associated with the extracted workflow of operator actions based on the extracted workflow of operator actions.

7. The method according to any one of claims 1 to 6, wherein the obtaining the third data further comprises at least one of
merging the first data and the second data based on time stamps obtainable from the predetermined past time period,
adding the first descriptive text data to the merged first data and second data,
adding the second descriptive text data to the merged first data and second data,
filtering, for a same time stamp, duplicate from the first data and the second data, and
filtering, for a same time stamp, duplicate descriptive text data from the first descriptive text data and the second descriptive text data.

8. The method according to any one of claims 1 to 7, wherein the obtaining the third data further comprises creating, from the merged first data and second data and from P&IDs associated with the operation, a causal graph associated with the operation; and including a result of the creating into the third data.

9. The method according to any one of claims 1 to 8, wherein the obtaining the pseudocode and/or the control code comprises
taking, by the multimodal AI/ML model and from the third data, a sequence of operational steps associated with the workflow of operator actions and taking, by the multimodal AI/ML model and from the third data, time series data of process variables associated with the sequence of operational steps; and
generating, by the multimodal AI/ML model, the pseudocode and/or the control code based on a result of the taking.

10. The method according to any one of claims 1 to 9, further comprising
providing the pseudocode and/or control code to an operator of the process plant, by executing the pseudocode and/or control code in a simulation environment and/or in a real process plant context,
receiving feedback on a result of the executing; and
training and/or finetuning the multimodal AI/ML model based on the received feedback.

11. The method according to claim 10,
wherein the feedback it at least one of confirmative and penalizing,
wherein the feedback is provided by an operator of the process plant,
wherein the feedback is related to one or more time stamps included in at least one of the third data, the pseudocode and the control code.

12. The method according to any one of claims 1 to 11, further comprising:
obtaining a standard operating procedure, SOP, that comprises a sequence of operator actions that overlap at least part of the operator actions of the workflow; and
updating the sequence of operator actions of the obtained SOP based on the operator actions of the workflow.

13. A data processing apparatus for automatically providing assistance in control of a process plant, the data processing apparatus comprising one or more processors being configured to carry out the method of any of claims 1 to 12.

14. A computer-readable medium comprising instructions which, when executed by a computing system, cause the computing system to perform the method of any of claims 1 to 12.

15. A computer program product comprising instructions which, when executed by a computing system, enable and/or cause the computing system to perform the method of any of claims 1 to 12.
